Europäisches Patentamt

European Patent Office

Office européen des brevets

(19)

(11) **EP 0 980 973 B1**

(12) **EUROPEAN PATENT SPECIFICATION**

(45) Date of publication and mention
of the grant of the patent:
**18.05.2005 Bulletin 2005/20**

(51) Int Cl.⁷: **F02D 41/40**

(21) Application number: **99116284.3**

(22) Date of filing: **18.08.1999**

(54) **A fuel injection control device for an internal combustion engine**

Kraftstoffeinspritzsteuervorrichtung für eine Brennkraftmaschine

Dispositif de commande d'injection de carburant pour moteur à combustion interne

(84) Designated Contracting States:
**DE FR GB IT**

(30) Priority: **19.08.1998 JP 23299898**

(43) Date of publication of application:
**23.02.2000 Bulletin 2000/08**

(73) Proprietor: **TOYOTA JIDOSHA KABUSHIKI KAISHA**
**Toyota-shi, Aichi-ken 471-8571 (JP)**

(72) Inventors:
• **Kibe, Kazuya**
  **Toyota-shi, Aichi-ken, 471-8571 (JP)**
• **Gotou, Isamu**
  **Toyota-shi, Aichi-ken, 471-8571 (JP)**
• **Kaneko, Tomohiro**
  **Toyota-shi, Aichi-ken, 471-8571 (JP)**
• **Ishigaki, Hirosato**
  **Toyota-shi, Aichi-ken, 471-8571 (JP)**
• **Yamamoto, Takahashi**
  **Toyota-shi, Aichi-ken, 471-8571 (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4-6**
**80336 München (DE)**

(56) References cited:
**EP-A- 0 812 981**     **US-A- 4 463 729**
**US-A- 4 697 568**     **US-A- 4 782 803**
**US-A- 4 841 936**

• PATENT ABSTRACTS OF JAPAN vol. 011, no.
  247 (M-615), 12 August 1987 (1987-08-12) & JP 62
  055436 A (TOYOTA MOTOR CORP), 11 March
  1987 (1987-03-11)
• PATENT ABSTRACTS OF JAPAN vol. 008, no.
  012 (M-269), 19 January 1984 (1984-01-19) & JP
  58 174128 A (KAWASAKI JUKOGYO KK), 13
  October 1983 (1983-10-13)

## Description

TECHNICAL FIELD

The present invention relates to a fuel injection control device for an internal combustion engine and, particularly, to a fuel injection control device, such as a fuel injection control device for a diesel engine, which executes a subsidiary fuel injection prior to a main fuel injection.

BACKGROUND ART

In an internal combustion engine such as a diesel engine, diesel knock occurs. Diesel knock is a phenomenon which causes combustion noise to increase. When the rate of pressure rise in the cylinder of the engine becomes excessively large due to, for example, a delay in ignition of the fuel, resonance in the combustion gas occurs. This causes sudden increase in combustion noise, i.e., diesel knock.

It is generally known that the increase in combustion noise occurs under conditions where the ignition of fuel is delayed, such as in a cold start of the engine. Further, in a transient operating condition of the engine, the increase in combustion noise may occur due to delays in the changes in the temperatures of intake air and combustion chambers of the engine. Further, in an engine using a high pressure fuel injection, since combustion speed increases due to high fuel injection pressure, an increase in combustion noise may occur.

It is known in the art that a subsidiary fuel injection (a pilot fuel injection) which injects a small amount of fuel in the cylinder prior to the main fuel injection is effective for preventing the increase in combustion noise. Since fuel injected in the pilot fuel injection burns before the main fuel injection is executed, the temperature and the pressure in the cylinders become high when the main fuel injection is executed. Thus, the delay in the ignition of the fuel injected by the main fuel injection is reduced and, thereby, the increase in combustion noise is suppressed.

Heretofore, timing for executing a main fuel injection and a pilot fuel injection (a subsidiary fuel injection) was determined by the following procedure using numerical maps prepared on the basis of experiments.

[1] Main fuel injection timing

(1) Calculating the injection amount and the injection pressure of the main fuel injection in accordance with the engine operating condition (such as a degree of accelerator opening and an engine rotational speed) based on a predetermined fuel injection amount map.
(2) Calculating a basic main fuel injection timing in accordance with the engine rotational speed and the calculated fuel injection amount based on a predetermined basic main fuel injection timing map. The basic main fuel injection timing map is prepared previously based on experiment.
(3) Determining an actual main fuel injection timing (a final main fuel injection timing) by correcting the calculated basic main fuel injection timing in accordance with an actual intake air pressure and an actual cooling water temperature.

[2] Pilot fuel injection timing

(1) Determining a basic fuel injection interval based on the engine rotational speed and the main fuel injection amount based on a predetermined basic interval map. The basic fuel injection interval is an interval between the timing for starting the pilot fuel injection and the timing for starting the main fuel injection. The basic fuel injection interval map is previously prepared, based on experiment.
(2) Determining a cooling water temperature correction amount for the fuel injection interval based on a predetermined map.
(3) Calculating the pilot fuel injection timing by [pilot fuel injection timing] = [main fuel injection timing] + [basic fuel injection interval] + [cooling water temperature correction amount].

The basic main fuel injection timing map used for determining the main fuel injection timing and the basic fuel injection interval map used for determining the pilot fuel injection timing are prepared previously based on the results of experiment in which the actual engine is operated under a predetermined standard operating condition. The standard operating condition is an engine operating condition where the engine is operated at a constant speed and a constant load with constant cooling water temperature, boost pressure and intake air temperature. The main fuel injection timing determined by the basic main fuel injection map is timing for executing the main fuel injection where an optimum combustion of the fuel injected by the main fuel injection is obtained under the standard engine operating condition. Similarly, the basic fuel injection interval determined by the basic fuel injection interval map is the interval between the pilot fuel injection and the main fuel injection which gives a most effective reduction of the combustion noise by the pilot fuel injection without causing an exhaust smoke and deterioration of exhaust gas emission under the standard engine operating condition.

In the actual engine operation, however, the engine is usually operated under the conditions different from the standard operating condition. This means that the optimum results are not obtained in the actual engine operation if the basic main fuel injection timing and the basic fuel injection interval are used. Therefore, the corrected values of the basic main fuel injection and the basic fuel injection interval are used in the actual operation of the engine. Usually, the main fuel injection timing in the actual operation is determined by correcting the basic main fuel injection timing in accordance with the boost pressure and the cooling water temperature, and the fuel injection interval in the actual operation is determined by correcting the basic fuel injection interval in accordance with the cooling water temperature. These corrections are made in order to adjust the state of combustion of the fuel injected by the main fuel injection and the pilot fuel injection so that the actual states of combustion thereof approach the optimum combustion state under the standard operating condition.

However, since factors affecting the states of combustion of the fuel injected by the pilot fuel injection and main fuel injection are not limited to the boost pressure and cooling water temperature, the states of combustion of the fuel injected by the fuel injections in the actual operation do not become optimum in some cases even if the timing of fuel injections are corrected based on the boost pressure and cooling water temperature only.

Further, since the basic main fuel injection timing map and the basic fuel injection interval map is prepared based on the steady operation of the engine, the states of combustion of fuel deviate largely from the optimum combustion state in a transient operating conditions (such as during an acceleration of the engine) if the corrections are only based on the boost pressure and the cooling water temperature. Therefore, heretofore, exhaust smoke (such as white smoke) or combustion noise are generated during an acceleration of the engine in some cases.

Furthermore, JP-A-62-055 436 suggests controlling the amount of pilot injection by carrying out a feedback control of an ignition delay time based on a detecting signal of an ignition sensor.

DISCLOSURE OF INVENTION

In view of the problems as set forth above, the object of the present invention is to provide a fuel injection control device for an internal combustion engine which is capable of optimizing the states of combustion of the fuel injected into the cylinder by the fuel injections by setting the amount and timing of the main fuel injection and the subsidiary fuel injection in accordance with the actual operating condition of the engine.

According to the present invention, there is provided a fuel injection control device for an internal combustion engine as defined in claim 1.

According to the present invention, the subsidiary fuel injection timing is set in such a manner that the delay time of the fuel injected by the subsidiary fuel injection before it ignites under the current operating condition (the actual operating condition) becomes the same as the optimum delay time under the standard operating condition. Therefore, the optimum combustion of the fuel injected by the subsidiary fuel injection is obtained under the actual operation of the engine and the exhaust smoke or deterioration of the exhaust emission are prevented from occurring in the actual operation of the engine.

According to a modification of the present invention as defined in claim 2 the basic subsidiary fuel injection timing determined based on the standard operating condition of the engine is corrected based on the temperature of the inner surface of the walls of the cylinders during a transient operation of the engine such as an acceleration of the engine. During the transient operation of the engine, the change in the temperature of the cylinder walls is delayed due to a relatively large heat capacity thereof. Therefore, by correcting the subsidiary fuel injection timing in accordance with the delay in the change of the temperature of the cylinder wall, the subsidiary fuel injection timing is adjusted to a value suitable for actual temperature of the cylinder wall and, thereby, the state of combustion of the fuel injected by the subsidiary fuel injection becomes the optimum.

According to another modification of the present invention as defined in claim 4 the amount of the subsidiary fuel injection is set at a maximum while ensuring that all the fuel injected by the subsidiary fuel injection completely burns before the main fuel injection starts. Thereby, since the maximum amount of fuel is supplied to the cylinder by the subsidiary fuel injection without adversely affecting the combustion of the fuel injected by the main fuel injection, the state of combustion of the fuel injected by the main fuel injection is optimized.

BRIEF DESCRIPTION OF THE DRAWINGS

The present invention will be better understood from the description as set forth hereinafter, with reference to the accompanying drawings in which:

Fig. 1 schematically illustrates the general configuration of an embodiment of the fuel injection control device according to the present invention when it is applied to an automobile diesel engine;
Fig. 2 is a diagram illustrating a method for calculating a cylinder volume during the operation of the engine;
Figs. 3 is a flowchart illustrating an embodiment of an operation for setting of the pilot fuel injection;
Fig. 4 is a flowchart illustrating an embodiment of an operation for setting of the main fuel injection; and
Figs. 5(A) and 5(B) are a flowchart illustrating an embodiment of an operation for setting of the pilot fuel injection and the main fuel injection simultaneously.

DESCRIPTION OF THE PREFERRED EMBODIMENT

Hereinafter, embodiments of the present invention will be explained in detail with reference to the accompanying drawings.

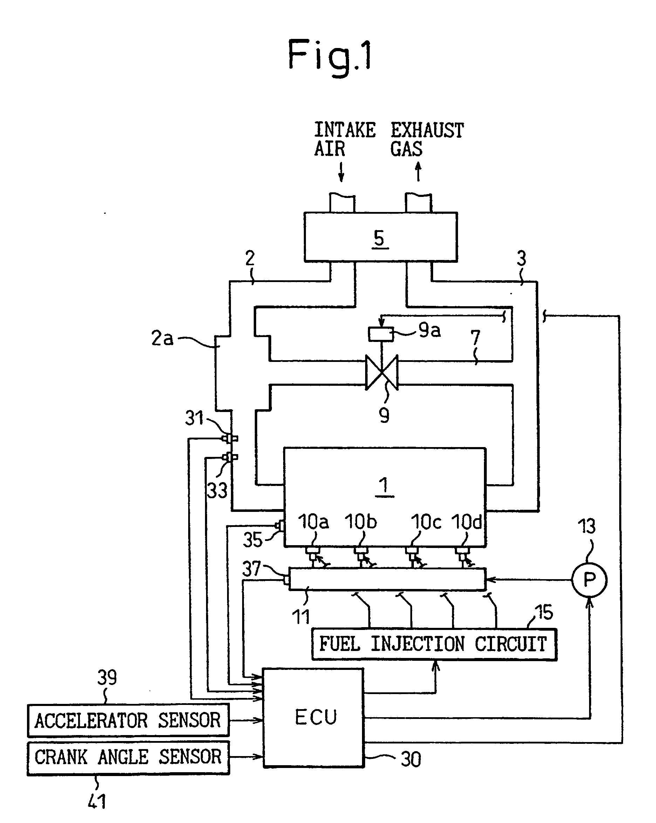

Fig. 1 shows a general configuration of an embodiment of the present invention when it is applied to an automobile diesel engine.

In Fig. 1, reference numeral 1 designates an internal combustion engine (in this embodiment, a four-cylinder four-cycle diesel engine is used). Numerals 2 and 3 represent an intake air passage and an exhaust gas passage of the engine, respectively. Numeral 5 is an exhaust turbocharger. Further, in this embodiment, an EGR device is provided for recirculating a part of exhaust gas of the engine 1 into a surge tank 2a on the intake air passage 2. The EGR device includes an EGR passage 7 connecting the exhaust gas passage 3 to the surge tank 2a on the intake air passage 2 and an EGR control valve 9 disposed on the EGR passage 7. 9a in Fig. 1 represents an appropriate type actuator, such as a vacuum actuator or a stepper motor, for driving the EGR control valve 9.

Numerals 10a to 10d in Fig. 1 designate fuel injection valves which inject fuel directly into the respective cylinders of the engine 1. The fuel injection valves 10a to 10d are all connected to a common reservoir (a common rail) 11. The common rail 11 serves to store high pressure fuel supplied from a high pressure fuel injection pump 13 and distribute the high pressure fuel to the fuel injection valves 10a to 10d.

In this embodiment, the high pressure fuel injection pump 13 is, for example, a plunger type high pressure pump equipped with a variable capacity control mechanism and pressurizes low pressure fuel supplied from a fuel tank (not shown) to a predetermined pressure before supplying it to the common rail.

In Fig. 1, numeral 30 is an electronic control unit (ECU) for controlling the engine 1. The ECU 30 may be constructed as a microcomputer of a known type including a read-only memory (ROM), a random-access memory (RAM), a microprocessor (CPU) and input/output ports all connected to each other by a bi-directional bus.

The ECU 30 performs basic control of the engine 1 such as fuel injection pressure control which adjusts the fuel pressure in the common rail 11 to a target pressure Pcrcfn by controlling the capacity of the high pressure fuel pump 13 and EGR control which adjusts degree of opening of the EGR control valve 9 by driving the actuator 9a in accordance with the engine load and speed based on a predetermined relationship. Further, the ECU 30 performs fuel injection control which adjusts the amount of fuel injected into the respective cylinders of the engine 1 by controlling the opening periods of the fuel injection valves 10a to 10d. In this embodiment, the ECU 30 improves the combustion of the fuel injected by the main fuel injection by executing the pilot fuel injection prior to the main fuel injection. Therefore, in the fuel injection control, the ECU 30 sets the timing and rate of injection of the main fuel injection and timing and the amount of the pilot fuel injection based on the operating condition of the engine in such a manner that a optimum combustion of the fuel injected by the respective fuel injections is obtained.

In order to perform these controls, a voltage signal corresponding to the pressure of the fuel in the common rail 11 is supplied to the input port of the ECU 30 from a fuel pressure sensor 7 disposed on the common rail 11 via an AD converter (not shown). An accelerator signal, which represents the amount of depression of an accelerator pedal by the operator of the automobile (accelerator opening ACCP), is also supplied to the input port of the ECU 30 via the AD converter from an accelerator sensor 39 disposed near the accelerator pedal (not shown). Numeral 35 in Fig. 1 is a cooling water temperature sensor disposed in a cooling water jacket of the engine and generates a signal corresponding to a cooling water temperature of the engine. Further, an intake air pressure sensor 31 which generates a signal corresponding to the intake air pressure (the boost pressure) of the engine and an intake air temperature sensor 33 which generates a signal corresponding to the intake air temperature of the intake air are disposed on the intake air passage 2. It is preferable to dispose the intake air pressure sensor 31 and the intake air temperature sensor 33 at positions near to the engine 1 so that the measured pressure and temperature represents the state of the intake air after it is uniformly mixed with the recirculated exhaust gas through the EGR passage 7. If the intake air passage 2 is provided with an intake throttle valve, the positions of the sensors 31 and 33 should be selected so that the detected pressure and temperature represents the state of the intake air sufficiently downstream of the throttle valve.

Further, numeral 41 in Fig. 1 designates a crank angle sensor which detects a rotational phase (i. e., a crank angle) of a crankshaft (not shown) of the engine 1. In this embodiment, the crank angle sensor 41 is actually composed of two sensors. One is a reference position sensor (not shown) disposed near a camshaft of the engine and generates a reference pulse signal every 720 degree rotation of the crankshaft of the engine, and another is a rotation angle sensor disposed near the crankshaft and generates a rotating pulse signal at a predetermined angle of rotation (for example, 15 degrees) of the crankshaft. These crank angle signals, i.e., the reference pulse signal and the rotating pulse signal are also supplied to the input port of the ECU 30. The ECU 30 calculates the rotational speed NE and the rotational phase of the crankshaft (the crank angle) based on the intervals of the rotation pulse signal and the number of the pulse received after the reference pulse signal was generated, respectively.

The signals representing the intake air pressure PI and intake air pressure TI, respectively, are supplied to the input port of the ECU 20 via an AD converter (not shown) from the sensors 31 and 33. Further, the signals representing the engine cooling water temperature TW and the fuel pressure Pcr in the common rail 11 are supplied from the sensors 35 and 37 to the input port of the ECU 20 via the AD converter.

The output port of the ECU 30 is connected to the fuel injection valves 10a to 10d via a fuel injection circuit 15 in order to control the fuel injections to the engine 1. Further, the output port of the ECU 30 is connected to the actuator 9a of the EGR control valve 9 via an drive circuit (not shown) in order to control the degree of opening of the EGR control valve 9. The output port of the ECU 30 is further connected to the variable capacity control mechanism of the high pressure fuel injection pump 13 via a drive circuit (not shown). The ECU 30 controls the discharge capacity of the pump 13 by controlling the variable capacity control mechanism of the pump in such a manner that the common rail fuel pressure Pcr detected by the sensor 37 becomes the target pressure Pcrcfn.

Timing and the period of the pilot fuel injection and the main fuel injection were determined, heretofore, based on basic maps. These basic maps were prepared by adaptation work in which the optimum values of the timing and the period of the fuel injections were selected by actually operating the engine under a predetermined standard operating condition.

Next, the fuel injection of the engine 1 in the present embodiment will be explained. In this embodiment, a pilot fuel injection (a subsidiary fuel injection) which injects a small amount of fuel into the cylinders prior to the main fuel injection is performed in addition to a normal fuel injection (a main fuel injection). The fuel injected by the pilot fuel injection burns before the main fuel injection starts and raises the temperature and the pressure in the cylinders. Therefore, the condition in the cylinders becomes suitable for promoting the ignition of the fuel when the main fuel injection is executed and the ignition and the combustion of the fuel injected by the main fuel injection are improved.

Further, though the basic maps are corrected in accordance with the actual operating condition of the engine in some cases, the correction is usually made using only major factors affecting the combustion such as the cooling water temperature and the intake air pressure. Therefore, usually, the state of combustion was not optimum even after the correction was made. The reason why the correction is limited to the major factors is that the adaptation work is required to each of the factors to optimize the correction. In other words, in order to carry out the correction based on every factor affecting the combustion, an enormous amount of the adaptation work is required.

To solve this problem, the parameters of the pilot fuel injection and the main fuel injection are set in accordance with an analysis of combustion in the cylinder of the engine in such a manner that the combustion of the fuel injected by the fuel injections are optimized without carrying out complicated adaptation work.

Next, the procedures for setting the pilot fuel injection and the main fuel injection in the present embodiment will be explained separately.

I. The setting of the pilot fuel injection

The following two conditions are required for the pilot fuel injection.

　　(A) The timing of the pilot fuel injection must be set at timing where the fuel injected by the pilot fuel injection can ignite.
　　(B) The combustion of the fuel injected by the pilot fuel injection must be complete by the time when the main fuel injection begins.

The pilot fuel injection is executed before the piston reaches the top dead center in the compression stroke. Thus, the pilot fuel injection is usually executed when the temperature and the pressure in the cylinders are not sufficiently high. Therefore, if the timing of the pilot fuel injection is too early, the fuel injected does not ignite and adheres to the cylinder wall. This generates white smoke in the exhaust gas. Further, if the main fuel injection starts before all the fuel injected by the pilot fuel injection burns, the fuel injected by the main fuel starts to burn in a very rich air-fuel mixture. This causes black smoke in the exhaust gas and deterioration of exhaust emission.

On the other hand, as the amount of fuel burns before the main fuel injection starts increases, i.e., as the amount of fuel injected by the pilot fuel injection increases, the temperature and the pressure in the cylinder become higher and, thereby, the state of the combustion of the fuel injected by the main fuel injection is improved. Therefore, it is preferable to set the amount of the pilot fuel injection as large as possible provided the above-noted conditions (A) and (B) are satisfied.

In this embodiment, the timing and the amount of the pilot fuel injection are set in accordance with the actual operating condition of the engine so that the above-noted conditions (A) and (B) are satisfied.

The setting of the timing and the amount of the pilot fuel injection is executed in accordance with the following steps.

　　(1) Determining the basic pilot fuel injection timing Aplb.
　　(2) Calculating the cylinder volume Vplb at the basic pilot fuel injection timing Aplb.
　　(3) Calculating a required cylinder volume Vplc at the actual pilot fuel injection timing.
　　(4) Correcting Vplc based on a transient operating condition (calculating Vplcfn).
　　(5) Calculating the actual pilot fuel injection timing Aplcfn based on Vplcfn.

(6) Calculating a pilot fuel injection amount Qpl.

These steps will now be separately explained in detail.

(1) Determining the basic pilot fuel injection timing Aplb.

The basic pilot fuel injection timing Aplb and the main fuel injection timing Amain are determined from a basic fuel injection timing map using the engine speed NE and the amount of the main fuel injection Qfin. The basic fuel injection timing map is prepared based on the measured result obtained by operating the engine under the standard operating condition at constant engine speed and load. The main fuel injection timing Amain and the pilot fuel injection timing Aplb are expressed by the difference between the crank angle when the fuel injection starts and the crank angle at the top dead center.

The basic fuel injection timing map is a two-dimensional map using the engine speed NE and the main fuel injection amount Qfin as parameters and represents optimum timings of the main fuel injection and the pilot fuel injection under the standard operating condition. The basic fuel injection timing map is obtained by finding the optimum timings of the fuel injections during a steady operation of the engine under the standard condition, for example, under a constant cooling water temperature TW (such as TW = 80°C) and inlet air temperature TI and pressure PI (such as TI = 25°C and PI = 100 kPa). The optimum timings of the fuel injections are determined for various combination of main fuel injection amount Qfin and engine speed NE. The main fuel injection amount Qfin used is also given by a two-dimensional map using the engine speed NE and the accelerator opening ACCP.

(2) Calculating the cylinder volume Vplb at the basic pilot fuel injection timing Aplb.

The cylinder volume Vplb is calculated from the basic pilot fuel injection timing Aplb using the following formula [1].

$$Vplb = \pi R^2 \times ((CL/2) - (COS\ (Aplb)) \times (L/2)$$
$$+ L/(\varepsilon - 1)) \qquad [1]$$

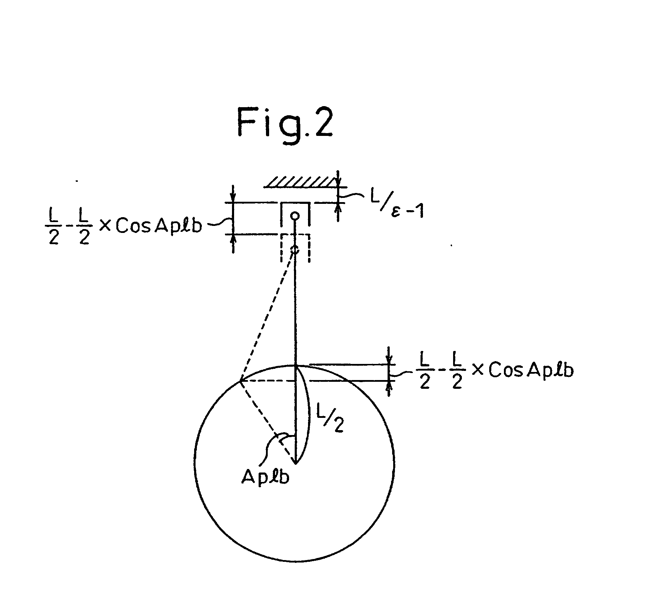

In the above formula [1], $\varepsilon$ is a compression ratio of the cylinder, R is a radius of the cylinder, L is a piston stroke. Since the cylinder volume at the top dead center becomes $\pi R^2 \times L/(\varepsilon - 1)$, as shown in Fig. 2, the cylinder volume when the crank angle is different from that of the top dead center by an angle Aplb is expressed by the above formula [1].

The cylinder volume Vplb calculated here is used for calculating the temperature in the cylinder at the basic pilot fuel injection timing Aplb under the standard operating condition of the engine.

(3) Calculating a required cylinder volume at the actual pilot fuel injection timing.

When the temperature and the pressure in the cylinder when the actual pilot fuel injection is executed is the same as those at the basic pilot fuel injection timing under the standard operating condition, the state of combustion of the fuel injected by the pilot fuel injection becomes the same as the state of combustion of the fuel injected by the pilot fuel injection at the basic pilot fuel injection timing under the standard operating condition. In other words, if the temperature and pressure in the cylinder when the actual pilot fuel injection is executed is the same as those at the basic pilot fuel injection timing, an optimum combustion of the fuel injected by the actual pilot fuel injection can be obtained. Therefore, in this embodiment, the cylinder volume, i.e., the degree of compression in the cylinder under the current operating condition, required for obtaining the same temperature and pressure in the cylinder as those at the basic pilot fuel injection timing under the standard operating condition, is calculated.

Assuming that the compression in the cylinder is adiabatic, the temperature Tplb of the compressed air in the cylinder at the basic pilot fuel injection timing Aplb is expressed by the following formula [2] using the cylinder volume Vplb at the basic pilot fuel injection timing Aplb.

$$Tplb = T_0 \times (V_0/Vplb)^{\kappa-1} \qquad [2]$$

$V_0$ and $T_0$ (°K) in the formula [2] are the cylinder volume and the temperature of air (i.e., temperature of air in the cylinder before being compressed) when the piston is at the bottom dead center, $\kappa$ is a ratio of specific heat of air ($\kappa \cong 1.4$). In other words, Tplb is calculated as a temperature when air at a temperature $T_0$ and a volume $V_0$ is a diabatically compressed to a volume Vplb. However, the temperature Tplb obtained by the formula [2] is a temperature of air when the temperature and the pressure before it is compressed are values corresponding to the standard operating condition (i.e., the values corresponding to the condition where the engine cooling water temperature TW = 80°C, intake air temperature TI = 25°C and intake air pressure PI = 100 kPa). Therefore, if the actual operating condition of the engine is different from the standard operating condition, the temperature ($T_0$) and pressure of air in the cylinder before it is compressed and the cylinder wall temperature are different from those under the standard operating condition and the temperature and the pressure in the cylinder after it is compressed also become different from those under the standard operating condition even if the volume of the air after it is compressed is the same.

On the other hand, the delay time τpl of the fuel injected by the pilot fuel injection before it ignites is nearly the same if the temperature and the pressure of air in the cylinder are the same when the pilot fuel injection begins. Therefore, if the temperature and the pressure in the cylinder at the actual pilot fuel injection timing under the actual operating condition is selected so that they become the same as the temperature and the pressure at the basic pilot fuel injection timing Aplb under the standard operating condition, the delay time τpl also becomes the same as that of the pilot fuel injection executed at the basic pilot fuel injection timing Aplb under the standard operating condition. In other words, if the temperature and the pressure in the cylinder when the pilot fuel injection is executed are adjusted so that they coincide with the temperature and pressure at the basic fuel injection timing, an optimum delay time τpl of the fuel injected by the actual pilot fuel injection can be obtained.

In this embodiment, the cylinder volume Vplc which is required, under the current operating condition, to obtain the cylinder temperature and pressure the same as those at the basic pilot fuel injection timing, under the standard operating condition, is calculated.

Vplc may be obtained by a calculation using a formula similar to the above-noted formula [2] used for calculating Tplb. However, it is expected that the calculated Vplc includes some amount of error since the compression in the cylinder, for example, is not completely adiabatic. Therefore, in this embodiment, the effect of each parameter representing an engine operating condition (the intake air temperature TI, the intake air pressure PI and cooling water temperature TW) has been evaluated separately in order to calculate the cylinder volume Vplc required under the current operating condition from the Vplb calculated by the formula [1]. Namely, in this embodiment, the cylinder volume required for obtaining the temperature and pressure the same as those at the basic pilot fuel injection timing under the standard operating condition has been measured by experiment in which the actual engine was operated while changing the parameters TI, PI and TW, one by one and separately, while keeping the other parameters constant and the effects of the respective parameters on the change in the required cylinder volume has been expressed in the form of correction factors KTI, KPI and KTW. By using the correction factors KTI, KPI and KTW, the cylinder volume required under the actual operating condition is calculated by the following formula.

$$Vplc = Vplb \times KPI \times KTI \times KTW \qquad [3]$$

In the formula [3], KTI, KPI and KTW are an intake air temperature correction factor, an intake air pressure correction factor and a cooling water temperature correction factor, respectively, and Vplb is the cylinder volume calculated by the formula [1]. The values of the correction factors KTI, KPI and KTW are given in the form of one-dimensional maps using the intake air temperature TI, intake air pressure PI and cooling water temperature TW, respectively, as a parameter.

Though the correction factors KTI, KPI and KTW are determined by experiment, they generally have the following characteristics.

For example, when the intake air pressure PI increases, the pressure of air in the cylinder before it is compressed becomes higher. In this case, since the compression ratio required for obtaining a given pressure in the cylinder decreases, the required cylinder volume after compression becomes larger. Thus, the value of the correction factor KPI generally becomes larger as the intake air pressure (the boost pressure) PI increases.

Similarly to the above, when the intake air temperature TI becomes higher, the temperature of air in the cylinder before it is compressed becomes higher. Thus, the compression ratio required for obtaining a given temperature decreases and the required cylinder volume after compression becomes larger. Therefore, the value of the correction factor KTI generally becomes larger as the intake air temperature TI becomes higher.

Further, when the cooling water temperature TW becomes higher, since the cylinder wall temperature increases accordingly, the compression ratio required for obtaining a given temperature decreases. Therefore, the value of the correction factor KTW becomes larger as the cooling water temperature KTW becomes higher.

(4) Correcting Vplc based on a transient operating condition (calculating Vplcfn).

Next, Vplc calculated by the above (3) is further corrected in order to compensate for the rate of change in the conditions during a transient operating condition.

The cylinder volume Vplc calculated by the formulas [1] and [3] is a value corresponding to a steady operation of the engine since the basic fuel injection timing map used for calculating the basic pilot fuel injection timing Aplb has been prepared based on a steady operation of the engine (i.e., the engine speed NE and the main fuel injection amount Qfin are kept constant). In other words, Aplb calculated from the basic fuel injection timing map assumes that the temperature of cylinder wall is a temperature corresponding to the steady operation of the engine. However, when the engine speed NE and fuel injection amount Qfin change, the temperature of the cylinder wall does not immediately reach the temperature corresponding to the steady operation due to its heat capacity. Therefore, when the engine speed NE and fuel injection amount Qfn change, the value of Aplb obtained from the basic fuel injection timing (and Vplb calculated from Aplb) becomes the value corresponding to the cylinder wall temperature in the steady operation after NE and Qfin has changed while the actual cylinder wall temperature is delayed before reaching the value corresponding to the steady operation. The true value of Vplc gradually changes during the transient operation of the engine before it reaches the calculated value of Vplc (Vplc corresponding to the steady operation). In this embodiment, it is assumed that the true value of the required cylinder volume reaches the value Vplc in the manner represented by a first-order delay change after NE and Qfin has changed, and the required cylinder volume Vplcfn during the transient conditions is obtained by the following formula.

$$Vplcfn = Vplcfn_{i-1} + (Vplc - Vplcfn_{i-1})/N \qquad [4]$$

In the formula [4], $Vplcfn_{i-1}$ is a value of Vplcfn obtained by the calculation last executed, Vplc is the required cylinder volume calculated this time using the formula [2] and [3]. N is a weighting factor and is given by the following formula.

$$1/N = (Qfin - Qfin_{i-1}) \times NE/a$$

Where, Qfin is the main fuel injection amount calculated this time and $Qfin_{i-1}$ is the same when the calculation was last executed. The term $(Qfin - Qfin_{i-1}) \times NE$ represents a change in the amount of fuel supplied to the cylinder per unit time, i.e., a change in the amount of heat supplied to the cylinder wall. During the steady operation, since $Qfin - Qfin_{i-1} = 0$, the Vplcfn becomes a constant value.

(5) Calculating the actual pilot fuel injection timing Aplcfn based on Vplcfn.

From the above explanation, it will be understood that the delay τpl of the ignition of the fuel injected by the pilot fuel injection becomes the same as that of the basic pilot fuel injection timing regardless of the actual operating condition (including whether the operation is steady or transient) if the pilot fuel injection is executed when the cylinder volume becomes Vplcfn. However, the actual pilot fuel injection timing must be expressed in crank angles. Therefore, next, the pilot fuel injection timing Aplcfn under the current operating condition, i.e., the crank angle where the cylinder volume becomes Vplcfn is calculated from Vplcfn by the following formula.

$$Aplcfn = COS^{-1}(1 + (2 / (\varepsilon - 1))$$

$$- (2 \times Vplcfn) / (L \times \pi R^2) \qquad [5]$$

(6) Calculating a pilot fuel injection amount Qpl.

The pilot fuel injection amount Qpl is calculated from the pilot fuel injection timing Aplcfn and engine speed NE, and the main fuel injection timing Amain obtained from the basic fuel injection timing map.
As explained before, combustion of the fuel injected by the pilot fuel injection must be complete before the main fuel injection starts. Further, it is preferable that the pilot fuel injection amount is as large as possible provided the fuel injected by the pilot fuel injection burns before the main fuel injection starts because the state of combustion of the fuel injected by the main fuel injection becomes better as the amount of pilot fuel injection becomes larger.
Time required for complete the combustion of the fuel injected by the pilot fuel injection is expressed by τpl + FPpl. Where, τpl is the delay of ignition of the fuel injected by the pilot fuel injection. FPpl is a time required for completing the combustion of the fuel injected by the pilot fuel injection after it ignites and is determined by the pilot fuel injection amount Qpl and the temperature and pressure in the cylinder when the fuel is injected. Therefore, in order to complete the combustion of the fuel injected by the pilot fuel injection before the main fuel injection starts, the interval between the pilot fuel injection and the main fuel injection must be longer than (τpl + FPpl). Since τpl and FPpl are expressed in milliseconds, these values are converted into crank angles in order to calculate the required interval between the pilot fuel injection and the main fuel injection (which are expressed by crank angles).
The required interval between the pilot fuel injection timing Aplcfn and the main fuel injection Amain is expressed by

$$Aplcfn - Amain > (\tau pl + FPpl) \times NE \times 360/60/1000$$

In the above formula, the engine speed NE is expressed by revolutions per minute (rpm).
As explained before, the pilot fuel injection timing Aplcfn is set in such a manner that the temperature and the pressure in the cylinder when the pilot fuel injection is executed become the same as those at the basic fuel injection timing Aplb under the standard operating condition. Further, the temperature and the pressure in the cylinder at the basic fuel injection timing Aplb under the standard operating condition are the optimum values for combustion of the injected fuel and become substantially constant. Namely, in this embodiment, the temperature and pressure in the cylinder at the actual pilot fuel injection timing Aplcfn also become substantially constant value. When the temperature and the pressure in the cylinder are constant, the delay τpl of ignition of fuel also becomes constant. Further, the combustion speed of the fuel also becomes constant when the temperature and the pressure in the cylinder are constant. Therefore, time FPpl required for burning the fuel injected by the pilot fuel injection becomes proportional to the pilot fuel injection amount Qpl, in this embodiment. Namely, FPpl = b x Qpl (b is a proportional factor determined by the engine speed NE).

Therefore, using this relationship, the above formula is rewritten as

$$b \times Qpl < ((Aplcfn - Amain)/NE) \times c - \tau pl$$

Thus, the pilot fuel injection amount Qpl is calculated by

$$Qpl < (((Aplcfn - Amain)/NE) \times c - \tau pl)/b$$

Where, c is a constant and calculated by

$$c = 60 \times 1000/360.$$

The maximum allowable value of the pilot fuel injection amount Qpl is determined by the above formula using the pilot fuel injection timing Aplcfn and the main fuel injection timing Amain. In this embodiment, the maximum allowable value Qpl of the pilot fuel injection has been measured by operating the actual engine with various values of ((Aplcfn - Amain)/NE) and the measured values of Qpl has been prepared as an one-dimensional numerical map using the value of ((Aplcfn - Amain)/NE) as a parameter. During the actual operation of the engine, the value of Qpl is obtained from this numerical map using the actual pilot fuel injection timing Aplcfn and the main fuel injection timing Amain calculated by the procedure explained above and the engine speed NE.

According to this embodiment, since the pilot fuel injection timing Aplcfn is set in such a manner that the state of combustion of the fuel injected by the pilot fuel injection becomes the same as that of the fuel injected at the basic pilot fuel injection timing under the standard operating condition, the optimum pilot fuel injection timing can be easily set in the actual operation of the engine. Further, since the optimum pilot fuel injection timing is set easily, the optimum pilot fuel injection amount can be also found easily.

Further, in this embodiment, the adaptation works required for different type of the engines to optimize the timing and the amount of the pilot fuel injection are limited to the preparation of the basic fuel injection timing maps for determining the basic pilot fuel injection timing Aplb and the maps for determining the correction factors KTI, KPI, KTW, and the map for determining the pilot fuel injection amount Qpl using ((Aplcfn - Amain)/NE). Therefore, the adaptation work for different types of engine are largely simplified and, thereby, the optimum pilot fuel injection control can be achieved without increasing the amount of the adaptation work.

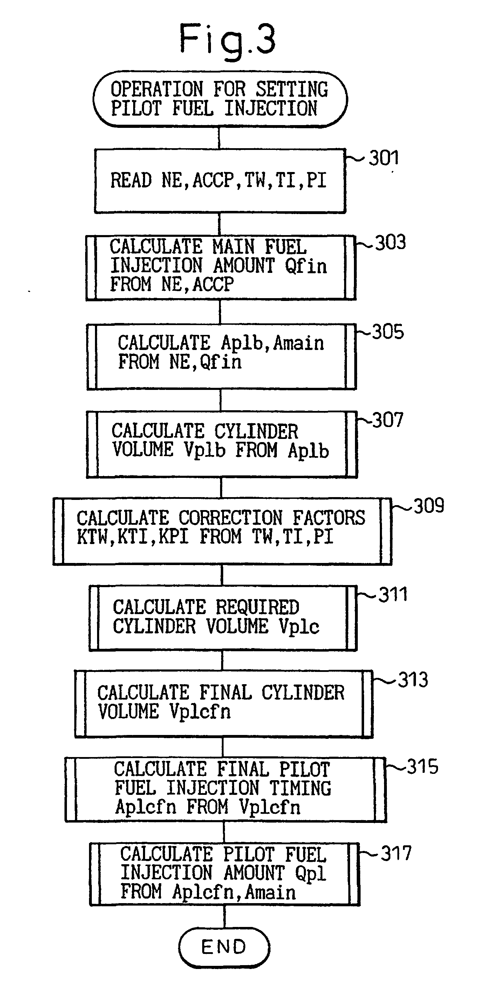

Fig. 3 is a flowchart illustrating the operation for calculating the pilot fuel injection timing Aplcfn and the pilot fuel injection amount Qpl explained above. This operation is performed by the ECU 30 of the engine 1 by a routine executed at predetermined intervals (for example, at predetermined rotation angles of the crankshaft of the engine).

When the operation starts in Fig. 3, at step 301, the engine speed NE, the accelerator opening ACCP, the engine cooling water temperature TW, the intake air temperature TI and the intake air pressure PI are read from the respective sensors and, at step 303, the main fuel injection amount Qfin is determined from the engine speed NE and the accelerator opening ACCP using the numerical map.

At step 305, the basic pilot fuel injection timing Aplb and the main fuel injection timing Amain are determined from the main fuel injection amount Qfin and the engine speed NE using the basic fuel injection timing maps. Further, at step 307, the cylinder volume Vplb is calculated from Aplb using the formula [1]. At step 309, the correction factors KTW, KTI and KPI are determined from the engine cooling water temperature TW, the intake air temperature TI and the intake air pressure PI, respectively, using the respective maps and, at step 311, the cylinder volume Vplc required for obtaining the temperature and pressure in the cylinder the same as the temperature and pressure at the basic pilot fuel injection timing is obtained by correcting Vplb by the correction factors KTW, KTI and KPI using the formula [3].

The final value Vplcfn of the required cylinder volume is calculated at step 313 by correcting the calculated Vplc using the formula [4]. At step 315, the actual pilot fuel injection timing Aplcfn is calculated from Vplcfn using the formula [5], and at step 317, the actual pilot fuel injection amount Qpl is calculated from the actual fuel injection timing Aplcfn, the main fuel injection timing Amain and the engine speed NE.

II. The setting of the main fuel injection

In order to obtain complete combustion of the fuel injected by the main fuel injection, the fuel must be supplied at a rate matching the combustion speed of the fuel. Therefore, the rate of fuel injection must match the combustion speed. Further, the combustion of the fuel injected by the main fuel injection must occur in an optimum time period. If the actual combustion occurs on the outside of this optimum period, for example, if the combustion occurs before the piston reaches the top dead center, or if the combustion continues until the latter part of the expansion stroke of the piston), an increase in the loss of the engine power, or deterioration of exhaust emission will occur.

Therefore, in this embodiment, the rate of fuel injection (the injection pressure, i.e., the pressure in the common rail) is set at an optimum value in accordance with the combustion speed of the fuel at the main fuel injection timing and the main fuel injection timing is set in such a manner that the combustion period of fuel injected by the main fuel injection (i.e., the fuel injection period) lies within the optimum period.

The main fuel injection in this embodiment is set in accordance with the following procedure.

(1) Determining a basic main fuel injection timing Amainb and a basic fuel injection pressure (the common rail pressure) Pcrb.
(2) Calculating a steady operation common rail pressure Pcrc in accordance with the actual combustion speed.
(3) Calculating a final (actual) common rail pressure Pcrcfn by correcting the steady operation common rail pressure Pcrc based on a transient operating condition.
(4) Calculating a final main fuel injection period Tqfn and a basic main fuel injection period Tqfnb based on the final common rail pressure Pcrcfn.
(5) Determining the main fuel injection timing Amainfn.

These steps will now be separately explained in detail.

(1) Determining a main fuel injection timing Amainb and a basic fuel injection pressure (the common rail pressure) Pcrb.

The basic main fuel injection timing Amainb is determined in accordance with the engine speed NE and the main fuel injection amount Qfin using the basic fuel injection timing map which is a map the same as that used for determining the basic pilot fuel injection timing Aplb.

As explained before, the basic fuel injection timing map is prepared under the standard operating condition, i.e., on the basis that the engine is operated at a steady condition with the cooling water TW, the intake air temperature TI and the intake air pressure PI being kept at constant values (for example, TW = 80°C, TI = 25°C and PI = 100 kPa) and that the pilot fuel injection is executed at the basic pilot fuel injection timing Aplb explained before. The main fuel injection timing Amainb is an optimum main fuel injection timing which gives the most preferable engine output torque characteristics and the exhaust emission under the above-explained conditions with given speed NE and fuel injection amount Qfin. The main fuel injection amount Qfin is determined from the accelerator opening ACCP and the engine speed NE using a predetermined numerical map.

On the other hand, the basic common rail pressure (i.e., the fuel injection pressure) Pcrb is determined from the accelerator opening ACCP and the engine speed NE using a basic common rail pressure map.

Similarly to the basic fuel injection timing map, the basic common rail pressure map is prepared on the basis that the engine is operated at a steady condition with the cooling water TW, the intake air temperature TI and the intake air pressure PI being kept at constant values (for example, TW = 80°C, TI = 25°C and PI = 100 kPa) and that the pilot fuel injection is executed at the basic pilot fuel injection timing Aplb explained before. The basic common rail pressure Pcrb is a common rail pressure which gives the rate of fuel injection matching the combustion speed of fuel when the main fuel injection amount is Qfin and the engine speed is NE under the above-explained standard operating condition.

(2) Calculating a steady operation common rail pressure Pcrc in accordance with the actual combustion speed.

The basic common rail pressure Pcrb determined by the above-explained step is a common rail pressure which gives a rate of fuel injection matching the combustion speed of fuel under the standard operating condition. Since the actual combustion speed of fuel deviates from the combustion speed of fuel under the standard operating condition when the actual operating condition deviates from the standard operating condition, the basic common rail pressure must be corrected in accordance with the actual combustion speed of fuel.

The combustion speed of fuel injected by the main fuel injection is determined by the rate at which the injected fuel forms an air-fuel mixture in the cylinder. Further, this rate is determined by the temperature, the pressure and the oxygen concentration in the cylinder when the main fuel is injected. The temperature and the pressure in the cylinder are determined by the cooling water temperature TW, the intake air temperature TI and the intake air pressure PI. In this embodiment, the effects of the change in TW, TI and PI and the oxygen concentration in the intake air have been separately evaluated previously by experiment and correction factors LTW, LTI, LPI and LO have been obtained. Using these correction factors, an optimum common rail pressure Pcrc which matches the combustion speed of fuel under the actual operating condition is calculated by the following formula.

$$Pcrc = Pcrb \times LTW \times LTI \times LPI \times LO \qquad [6]$$

In the formula [6], LTW, LTI and LPI are a cooling water temperature correction factor, an intake air temperature correction factor and an intake air pressure correction factor, respectively. Further, LO in formula 6 is an oxygen concentration correction factor.

The correction factors LTW, LTI, LPI and LO represent the effects of the cooling water temperature TW, the intake air temperature TI, the intake air pressure PI and the oxygen concentration on the change in the optimum common rail pressure when TW, TI, PI and oxygen concentration are changed alone. The correction factors LTW, LTI, LPI and LO are obtained by experiment in which the optimum common rail pressure is measured by operating the actual engine in a steady condition while changing TW, TI, PI and oxygen concentration in the intake air one by one and independently from others. The correction factors LTW, LTI, LPI and LO are given in the form of one-dimensional maps using TW, TI, PI and oxygen concentration in the intake air, respectively. Though the correction factors LTW, LTI, LPI and LO are determined by experiment, they generally have the following characteristics.

For example, when any one of cooling water temperature, intake air temperature and intake air pressure increases, the combustion speed of fuel injected into the cylinder also increases. Therefore, the rate of fuel injection must be increased when any one of cooling water temperature, intake air temperature and intake air pressure increases. Therefore, the values of the correction factors LTW, LTI and LPI become larger as TW, TI and PI, respectively, becomes higher. Further, when the oxygen concentration in the intake air is high, the oxygen concentration in the cylinder also becomes high. Thus, when the oxygen concentration in the intake air increases, the combustion speed of fuel in the cylinder also increases. Therefore, the value of the correction factor LO becomes larger as the oxygen concentration in the intake air becomes higher. During the operation of the engine, the oxygen concentration in the intake air may be directly detected by disposing an oxygen sensor in the intake air passage downstream of the portion where the EGR passage is connected. However, since the oxygen concentration in the air is nearly constant, the oxygen concentration in the intake air is determined by the amount of EGR gas and the oxygen concentration therein. Therefore, in this embodiment, the oxygen concentration in the intake air is calculated based on the amount of the EGR gas and the amount of the intake air drawn into the engine. The amount of the EGR and the oxygen concentration therein are determined by the engine load and the engine speed.

(3) Calculating a final (actual) common rail pressure Pcrcfn by correcting the steady operation common rail pressure Pcrc based on a transient operating condition.

As explained before, the basic common rail pressure Pcrc calculated by the above-explained step is the value based on the data taken during the steady operation of the engine. Therefore, the value of the calculated Pcrc is matches only the combustion speed during the steady operation. In a transient operation of the engine, such as during an acceleration, the temperature of the cylinder wall does not immediately reach the value in the steady operation due to a relatively large heat capacity of the cylinder wall. Therefore, the calculated Pcrc must be corrected in accordance with the delay in the change of the cylinder wall temperature during a transient operation. This correction is made in the similar manner as the transient correction of Vplc in the pilot fuel injection which was explained before. Namely, the final (actual) common rail pressure Pcrcfn is calculated by the following formula.

$$Pcrcfn = Pcrcfn_{i-1} + (Pcrc - Pcrcfn_{i-1})/N \qquad [7]$$

In the formula [7], $Pcrcfn_{i-1}$ is a value of Pcrcfn last calculated and Pcrcfn is the final (actual) common rail pressure based on the actual operating condition. N is a weighting factor and given by the following formula.

$$1/N = (Qfin - Qfin_{i-1}) \times NE/a$$

Similarly to the correction of the pilot fuel injection explained before, Qfin in the above formula is the current main fuel injection amount. $Qfin_{i-1}$ is the main fuel injection amount last calculated, NE is the engine speed and a is a constant.

(4) Calculating a final main fuel injection period Tqfn and a basic main fuel injection period Tqfnb based on the final common rail pressure Pcrcfn.

Since the rate of fuel injection is determined by the actual common rail pressure Pcrcfn, the final (actual) main fuel injection period Tqfn is calculated from the final common rail pressure Pcrcfn and the final main fuel injection amount Qfin. In this embodiment, fuel injection period of a given fuel injection valve expressed by crank angle has been prepared as a three-dimensional map using the common rail pressure, fuel injection amount and engine speed as parameters, and the main fuel injection period Tqfn (expressed by crank angle) is obtained from this map using Pcrcfn and Qfin and NE. Similarly to Tqfn, the basic main fuel injection period Tqfnb (expressed by crank angle) is also obtained from this map using the basic common rail pressure Pcrb, the main fuel injection amount Qfin and engine speed NE.

(5) Determining the main fuel injection timing Amainfn.

In this embodiment, the actual main fuel injection timing Amainfn is determined in such a manner that the center of the period of combustion of the fuel injected by the main fuel injection coincides with the center of the period of combustion of the fuel when the fuel is injected at the basic main fuel injection timing Amainb under the standard operating condition.

As explained before, the basic fuel injection timing Amainb and the basic common rail pressure Pcrb (i.e., the rate of fuel injection) is determined by experiment in such a manner that combustion of the fuel injected into the cylinder occurs in the period which gives the optimum engine torque characteristics and exhaust emission. Therefore, it is preferable that the period of combustion of the fuel injected by the actual main fuel injection exactly agrees with the above-noted optimum period. However, since the common rail pressure is corrected in accordance with the combustion speed in this embodiment, the main fuel injection period (i.e., the period of combustion of fuel) becomes different from that when the basic main fuel injection timing is determined by experiment. Therefore, it is not possible to make the actual combustion period exactly coincide with the combustion period of the basic main fuel injection timing.

Taking this fact into consideration, the combustion period in the actual operation is placed in such a manner that the center of the combustion period coincides with the center of the above-noted optimum combustion period.

In order to obtain optimum torque characteristics and the exhaust gas emission the same as those obtained by the combustion in the above-noted optimum combustion period, it is theoretically preferable that the gravity centers of the pressure indicator diagrams of the cylinders in the actual operation coincide with the gravity center of the pressure indicator diagram when the combustion occurs in the above-noted optimum combustion period. However, since it is difficult to calculate the gravity center of the pressure indicator diagram during actual operation, the actual main fuel injection timing Amainfn is set in such a manner that the center of the actual combustion period, instead of the gravity center, coincides with the above-noted optimum combustion period.

Therefore, the main fuel injection timing Amainfn in the actual operation in the engine is calculated by the following formula in this embodiment.

$$Amainfn = Amainb + (Tqfn - Tqfnb)/2 \qquad [8]$$

It will be understood from the above explanation that, according to this embodiment, the setting of the main fuel injection timing Amainb and the common rail pressure Pcrcfn can be set easily without requiring a large amount of the adaptation work for different types of engines. Therefore, similarly to the setting of the timing and the amount of the pilot fuel injection, an optimum main fuel injection control can be achieved without increasing the amount of adaptation work.

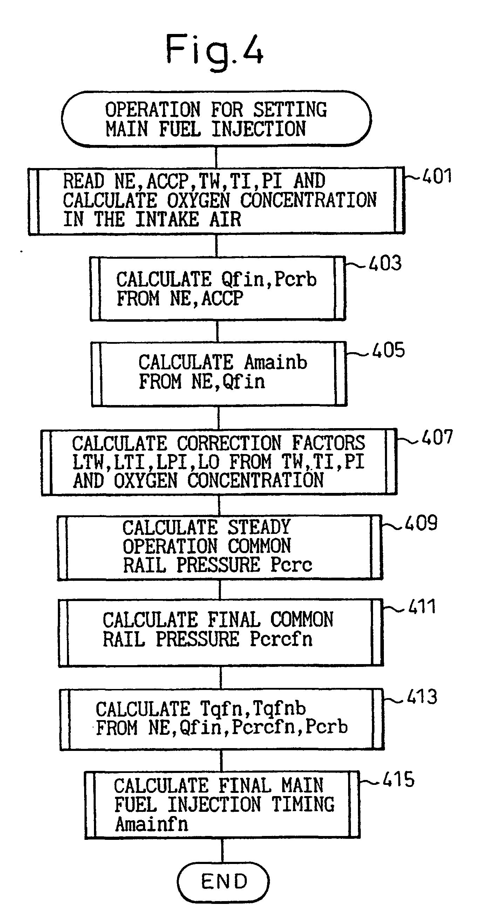

Fig. 4 illustrates an operation for setting the main fuel injection according to this embodiment. This operation is performed by a routine executed by the ECU 30 at predetermined intervals (for example, at predetermined rotation angles of the crankshaft of the engine).

In Fig. 4, at step 401, the engine speed NE, the cooling water temperature TW, the intake air temperature TI and the intake air pressure PI are read from the corresponding sensors. At step 401, the oxygen concentration in the intake air is further calculated based on the amount of EGR gas. At step 403, the main fuel injection amount Qfin and the basic common rail pressure Pcrb are determined from the engine speed NE and the accelerator opening ACCP using the corresponding maps.

As step 405, the basic main fuel injection timing Amainb is determined from the basic fuel injection timing map using the main fuel injection amount Qfin obtained at step 403 and the engine speed NE.

At step 407, the values of the correction factors LTW, LTI, LPI and LO are determined based on the respective maps using the cooling water temperature TW, the intake air temperature TI, the intake air pressure PI and the oxygen concentration in the intake air. Further, at step 409, the steady operation Pcrc is calculated from the basic common rail pressure Pcrb and the correction factors LTW, LTI, LPI and LO using the formula [6]. At step 411, the steady common rail pressure Pcrc is corrected in accordance with the formula [7] in order to obtain the final common rail pressure Pcrcfn is obtained.

Next, at step 413, the final main fuel injection period Tqfn and the basic main fuel injection period Tqfnb are determined from the corresponding maps using NE, Qfin, Pcrcfn and Pcrb. The final main fuel injection timing Amainfn is calculated at step 415 from the formula [8] using the basic final main fuel injection timing Amainb, the final main fuel injection period Tqfn and the basic main fuel injection period Tqfnb.

As explained above, though the combustion of the engine can be improved by using either of the pilot fuel injection setting operation in Fig. 3 and the main fuel injection setting in Fig. 4 alone, if both setting operations are performed, the combustion of the engine is further improved. In this case, first, the main fuel injection setting operation in Fig. 4 is performed in order to set the main fuel injection timing Amainfn and the common rail pressure Pcrcfn and, next, the pilot fuel injection setting operation in Fig. 3 is performed in order to set the pilot fuel injection timing Aplfn and the pilot fuel injection amount Qpl.

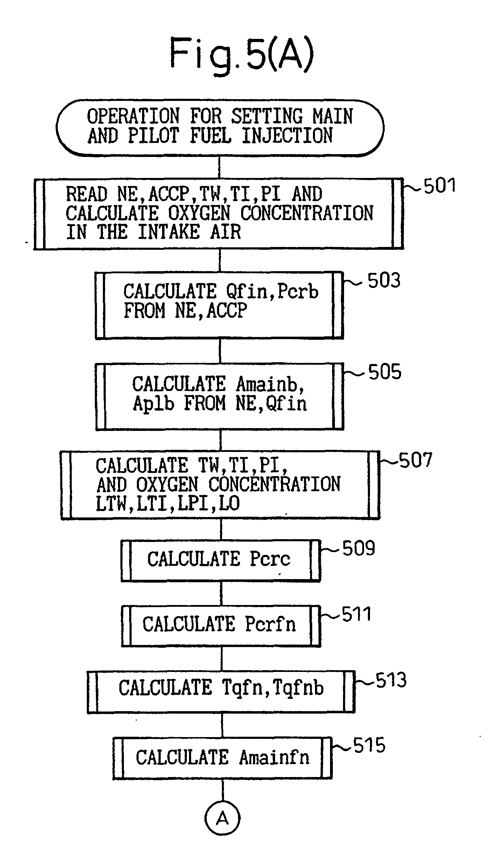

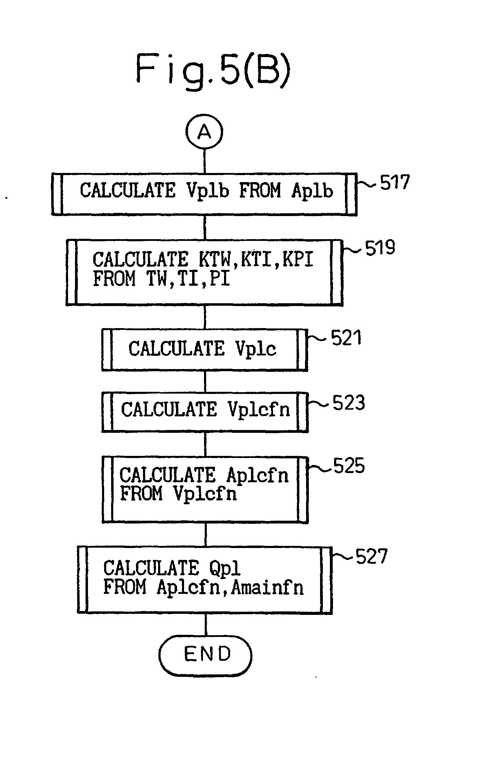

Figs. 5(A) and 5(B) are a flowchart illustrating the operation for setting the main fuel injection and the pilot fuel injection simultaneously. In this operation, the final common rail pressure Pcrcfn and the final main fuel injection timing Amainfn are calculated by the steps 501 through 515 (Fig. 5(A)) and the pilot fuel injection amount Qpl is obtained from the map same as that used at step 317 in Fig. 3 using the calculated Amainfn (steps 517 through 527 in Fig. 5(B)). The respective steps of the flowchart in Figs. 5(A) and 5(B) represent operations the same as those of the corresponding steps in Figs. 3 and 4. Therefore, the detailed explanation of Fig. 5 is not given here.

As explained above, according to the present invention, the state of combustion of the fuel injected by the pilot fuel injection and/or the main fuel injection can be optimized without requiring a large amount of the adaptation work. Therefore, the generation of combustion noise and exhaust smoke can be prevented effectively.

An internal combustion engine (1) is provided with fuel injection valves (10a, 10b, 10c, 10d) which directly inject fuel into the respective cylinders of the engine. An electronic control unit (ECU) (30) controls the fuel injection valves to execute a main fuel injection and a subsidiary fuel injection prior to the main fuel injection. The ECU sets the timing for executing the subsidiary fuel injection in such a manner that the delay of the fuel injected by the subsidiary fuel injection before it ignites becomes the same as the delay of the fuel injected by the subsidiary fuel injection under a predetermined standard operating condition of the engine. Further, the ECU sets the amount of subsidiary fuel injection so that it becomes the maximum limit which allows all the fuel injected by the subsidiary fuel injection to completely burn before the main fuel injection starts. Thus, since the amount of fuel injected by the subsidiary fuel injection is increased and the state of combustion of the fuel injected by the main fuel injection is improved. Further, all the fuel injected by the subsidiary fuel injection burns before the main fuel injection starts and a worsening of the exhaust gas emission and the generation of the exhaust smoke do not occur.

## Claims

1.  A fuel injection control device for an internal combustion engine adapted to execute a main fuel injection in which fuel is injected into cylinders of the engine and to execute a subsidiary fuel injection in which fuel is injected into the cylinders prior to the main fuel injection, wherein

    basic subsidiary fuel injection timing setting means (30) for setting a basic subsidiary fuel injection timing (Aplb) based on predetermined basic subsidiary fuel injection timing data in such a manner that the basic subsidiary fuel injection timing represents timing for executing the subsidiary fuel injection where delay time ($\tau$pl) of the fuel injected by the subsidiary fuel injection before it ignites under a predetermined standard operating condition of the engine becomes an optimum value; and

    actual subsidiary fuel injection timing setting means (30) for setting, by using intake air temperature (TI), intake air pressure (PI) and cooling water temperature (TW) as parameters, an actual subsidiary fuel injection timing (Aplcfn) based on the standard operating condition and the current operating condition of the engine in such a manner that the actual subsidiary fuel injection timing represents timing for executing subsidiary fuel injection where the delay time ($\tau$pl) of the fuel injected by the subsidiary fuel injection before it ignites under the current operating condition of the engine becomes the same as the optimum delay time defined by the basic subsidiary fuel injection timing (Aplb).

2.  A fuel injection control device according to claim 1, wherein the actual subsidiary fuel injection timing setting means further comprises correcting means (30) for correcting the actual subsidiary fuel injection timing (Aplcfn) based on a delay in a temperature change of an inner surface of the wall of the cylinders during a transient operation of the engine.

3.  A fuel injection control device according to claim 1 or claim 2, further comprising actual subsidiary fuel injection amount setting means (30) for setting an amount of fuel (Qpl) injected by the subsidiary fuel injection based on the subsidiary fuel injection timing (Aplcfn) set by the actual subsidiary fuel injection timing setting means and timing for the main fuel injection (Amain).

4.  A fuel injection control device according to claim 3, further comprising

    main fuel injection start timing setting means (30) for setting timing for starting the main fuel injection (Amain), wherein

    the actual subsidiary fuel injection amount setting means (30) sets the amount of fuel (Qpl) injected by the subsidiary fuel injection in such a manner that the amount of fuel injected by the subsidiary fuel injection becomes the maximum value under the condition where the time period (Aplcfn-Amain) between the start of the subsidiary fuel injection and the start of the main fuel injection is longer than a sum of a delay time ($\tau$pl) of the fuel injected by the subsidiary fuel injection before it ignites and a time (FFp1) required for burning all of the fuel injected by the subsidiary fuel injection.

5.  A fuel injection control device according to claim 3 or 4, wherein the subsidiary fuel injection amount setting means sets the amount of fuel (Qpe) injected by the subsidiary fuel injection by using intake air temperatur (TI), intake air pressure (PI) and cooling water temperature (TW) as parameters.

## Patentansprüche

1.  Kraftstoffeinspritzsteuervorrichtung für eine interne Verbrennungskraftmaschine zur Durchführung einer Kraftstoffhaupteinspritzung, bei der Kraftstoff in die Zylinder der Maschine eingespritzt wird, und zur Durchführung einer Kraftstoffvoreinspritzung, bei der Kraftstoff in die Zylinder vor der Kraftstoffhaupteinspritzung eingespritzt wird, wobei

    eine Grundkraftstoff-Voreinspritzungszeitpunkt-Einstelleinrichtung (30) zum Einstellen eines Grundkraftstoffvoreinspritzungszeitpunkts (Aplb) auf der Grundlage eines vorbestimmten Grundkraftstoffvoreinspritzungszeitpunktdatenwerts in einer solchen Weise, dass der Grundkraftstoffvoreinspritzungszeitpunkt einen Zeitpunkt zur Durchführung einer Kraftstoffvoreinspritzung darstellt, bei dem die Verzögerungszeit ($\tau$pl) des mittels der Kraftstoffvoreinspritzung eingespritzten Kraftstoffs, bevor er unter einer vorbestimmten Standardbetriebsbedingung der Maschine zündet, ein optimaler Wert wird, und eine tatsächliche Kraftstoffvoreinspritzungszeitpunkteinstelleinrichtung (30) zum Einstellen eines tatsächlichen Kraftstoffvoreinspritzungszeitpunkts (Aplcfn) unter Verwendung der Ansauglufttemperatur (TI), des Ansaugluftdrucks (PI) und der Kühlwassertemperatur (TW) als Parameter auf der Grundlage der Standardbetriebsbedingung und der gegenwärtigen Betriebsbedingung der Maschine in einer solchen Weise, dass der tatsächliche Kraftstoffvoreinspritzungszeitpunkt einen Zeitpunkt zur Durchführung einer Kraftstoffvoreinspritzung darstellt, bei dem die Verzögerungszeit ($\tau$pl) des mittels der Kraftstoffvoreinspritzung eingespritzten Kraftstoffs, bevor er unter der gegenwärtigen Betriebsbedingung der Maschine zündet, die gleiche wird, wie die durch den Grundkraftstoffvoreinspritzungszeitpunkt (Aplb) definierte, vorgesehen ist.

2.  Kraftstoffeinspritzsteuervorrichtung nach Anspruch 1, wobei die tatsächliche Kraftstoffvoreinspritzungszeitpunkteinstellvorrichtung weiter eine Korrektureinrichtung (30) zur Korrektur des tatsächlichen Kraftstoffvoreinspritzungszeitpunkts (Aplcfn) auf der Grundlage einer Verzögerung in einer Temperaturänderung einer Zylinderwandinnenfläche der Zylinder während eines Übergangsbetriebs der Maschine umfasst.

3.  Kraftstoffeinspritzsteuervorrichtung nach Anspruch 1 oder 2, weiter umfassend eine tatsächliche Kraftstoffvoreinspritzungsmengeneinstelleinrichtung (30) zur Einstellung einer mittels der Kraftstoffvoreinspritzung eingespritzten Kraftstoffmenge (Qpl) auf der Grundlage des mittels der tatsächlichen Kraftstoffvoreinspritzungszeitpunkteinstelleinrichtung eingestellten Kraftstoffvoreinspritzungszeitpunkts (Aplcfn) und dem Zeitpunkt für die Kraftstoffhaupteinspritzung (Amain).

4.  Kraftstoffeinspritzsteuervorrichtung nach Anspruch 3, weiter umfassend eine Kraftstoffhaupteinspritzungsstartzeitpunkteinstelleinrichtung (30) zur Einstellung des Startzeitpunkts zum Starten der Kraftstoffhaupteinspritzung (Amain), wobei die tatsächliche Kraftstoffvoreinspritzungsmengeneinstelleinrichtung (30) die mittels der Kraftstoffvoreinspritzung eingespritzte Kraftstoffmenge (Qpl) so einstellt, dass die mittels der Kraftstoffvoreinspritzung eingespritzte Kraftstoffmenge der Maximalwert unter der Bedingung wird, wo die Zeitdauer (Aplcfn-Amain) zwischen dem der Kraftstoffvoreinspritzung und dem Start der Kraftstoffhaupteinspritzung länger als eine Summe einer Verzögerungszeit ($\tau$pl) des mittels der Kraftstoffvoreinspritzung eingespritzten Kraftstoffs, bevor er zündet, und einer Zeit (FFpl), die zur Verbrennung des gesamten mittels der Kraftstoffvoreinspritzung eingespritzten Kraftstoffs erforderlich ist, ist.

5.  Kraftstoffeinspritzsteuervorrichtung nach Anspruch 3 oder 4, wobei die Kraftstoffvoreinspritzungsmengeneinstelleinrichtung die mittels der Kraftstoffvoreinspritzung eingespritzte Kraftstoffmenge (Qpl) unter Verwendung der Ansauglufttemperatur (TI), des Ansaugluftdrucks (PI) und der Kühlwassertemperatur (TW) als Parameter einstellt.

**Revendications**

1.  Dispositif de commande d'injection de carburant destiné à un moteur à combustion interne conçu pour exécuter une injection principale de carburant dans laquelle du carburant est injecté dans des cylindres du moteur et pour exécuter une injection de carburant auxiliaire dans laquelle du carburant est injecté dans les cylindres avant l'injection principale du carburant, dans lequel

    un moyen de réglage d'instant d'injection de carburant auxiliaire de base (30) destiné à régler un instant d'injection de carburant auxiliaire de base (Aplb) sur la base de données d'instant d'injection de carburant auxiliaire de base prédéterminées, de telle manière que l'instant d'injection de carburant auxiliaire de base représente un instant destiné à exécuter l'injection de carburant auxiliaire où le temps de retard ($\tau$pl) du carburant injecté par l'injection de carburant auxiliaire avant qu'il s'allume dans une condition de fonctionnement standard prédéterminée du moteur devient une valeur optimum, et

    un moyen de réglage d'instant d'injection de carburant auxiliaire réelle (30) destiné à régler, en utilisant une température d'air d'admission (TI), une pression d'air d'admission (PI) et une température d'eau de refroidissement (TW) comme paramètres, un instant d'injection de carburant auxiliaire réelle (Aplcfn) sur la base de l'état de fonctionnement standard et de l'état de fonctionnement en cours du moteur, de telle manière que l'instant d'injection de carburant auxiliaire réelle représente l'instant pour exécuter une injection de carburant auxiliaire où le temps de retard ($\tau$pl) du carburant injecté par l'injection de carburant auxiliaire avant qu'il s'allume dans les conditions de fonctionnement en cours du moteur devient le même que le temps de retard optimum défini par l'instant d'injection de carburant auxiliaire de base (Aplb).

2.  Dispositif de commande d'injection de carburant selon la revendication 1, dans lequel le moyen de réglage d'instant d'injection de carburant auxiliaire réelle comprend en outre un moyen de correction (30) destiné à corriger l'instant d'injection de carburant auxiliaire réelle (Aplcfn) sur la base d'un retard d'une variation de température d'une surface intérieure de la paroi des cylindres pendant un fonctionnement transitoire du moteur.

3.  Dispositif de commande d'injection de carburant selon la revendication 1 ou la revendication 2, comprenant en outre un moyen de réglage de quantité d'injection de carburant auxiliaire réelle (30) destiné à régler une quantité de carburant (Qpl) injectée par l'injection de carburant auxiliaire sur la base de l'instant d'injection de carburant auxiliaire (Aplcfn) réglée par le moyen de réglage d'instant d'injection de carburant auxiliaire réelle et de l'instant pour l'injection de carburant principale (Amain).

4.  Dispositif de commande d'injection de carburant selon la revendication 3, comprenant en outre

    un moyen de réglage d'instant de début d'injection de carburant principale (30) destiné à régler l'instant de lancement de l'injection de carburant principale (Amain), dans lequel

    le moyen de réglage de quantité d'injection de carburant auxiliaire réelle (30) règle la quantité de carburant (Qpl) injectée par l'injection de carburant auxiliaire de telle manière que la quantité de carburant injectée par l'injection de carburant auxiliaire devienne la valeur maximum dans une condition où l'intervalle de temps (Aplcfn-Amain) entre le début de l'injection de carburant auxiliaire et le début de l'injection principale est plus long qu'une somme d'un temps de retard ($\tau$pl) du carburant injecté par l'injection du carburant auxiliaire avant qu'il ne s'allume et d'un temps (FFpl) requis pour brûler la totalité du carburant injectée par l'injection du carburant auxiliaire.

5.  Dispositif de commande d'injection de carburant selon la revendication 3 ou 4, dans lequel le moyen de réglage de quantité d'injection de carburant auxiliaire règle la quantité de carburant (Qpe) injectée par l'injection de carburant auxiliaire en utilisant la température de l'air d'admission (TI), la pression de l'air d'admission (PI) et la température de l'eau de refroidissement (TW) en tant que paramètres.

# Fig.1

# Fig.2

# Fig.3

```
        ╭─────────────────────────╮
        │  OPERATION FOR SETTING  │
        │   PILOT FUEL INJECTION  │
        ╰─────────────────────────╯
                     │
     ┌───────────────────────────┐
     │  READ NE,ACCP,TW,TI,PI     │───301
     └───────────────────────────┘
                     │
     ┌───────────────────────────┐
     │  CALCULATE MAIN FUEL       │───303
     │  INJECTION AMOUNT Qfin     │
     │  FROM NE,ACCP              │
     └───────────────────────────┘
                     │
     ┌───────────────────────────┐
     │  CALCULATE Aplb,Amain      │───305
     │  FROM NE,Qfin              │
     └───────────────────────────┘
                     │
     ┌───────────────────────────┐
     │  CALCULATE CYLINDER        │───307
     │  VOLUME Vplb FROM Aplb     │
     └───────────────────────────┘
                     │
     ┌───────────────────────────┐
     │  CALCULATE CORRECTION FACTORS │───309
     │  KTW,KTI,KPI FROM TW,TI,PI  │
     └───────────────────────────┘
                     │
     ┌───────────────────────────┐
     │  CALCULATE REQUIRED        │───311
     │  CYLINDER VOLUME Vplc      │
     └───────────────────────────┘
                     │
     ┌───────────────────────────┐
     │  CALCULATE FINAL CYLINDER  │───313
     │  VOLUME Vplcfn             │
     └───────────────────────────┘
                     │
     ┌───────────────────────────┐
     │  CALCULATE FINAL PILOT     │───315
     │  FUEL INJECTION TIMING     │
     │  Aplcfn FROM Vplcfn        │
     └───────────────────────────┘
                     │
     ┌───────────────────────────┐
     │  CALCULATE PILOT FUEL      │───317
     │  INJECTION AMOUNT Qpl      │
     │  FROM Aplcfn,Amain         │
     └───────────────────────────┘
                     │
                 ╭───────╮
                 │  END  │
                 ╰───────╯
```

# Fig.4

```
┌─────────────────────────────┐
│   OPERATION FOR SETTING     │
│   MAIN FUEL INJECTION       │
└─────────────────────────────┘
              │
┌─────────────────────────────┐
│ READ NE,ACCP,TW,TI,PI AND   │ ~401
│ CALCULATE OXYGEN CONCENTRATION │
│ IN THE INTAKE AIR           │
└─────────────────────────────┘
              │
┌─────────────────────────────┐
│ CALCULATE Qfin,Pcrb         │ ~403
│ FROM NE,ACCP                │
└─────────────────────────────┘
              │
┌─────────────────────────────┐
│ CALCULATE Amainb            │ ~405
│ FROM NE,Qfin                │
└─────────────────────────────┘
              │
┌─────────────────────────────┐
│ CALCULATE CORRECTION FACTORS │ ~407
│ LTW,LTI,LPI,LO FROM TW,TI,PI │
│ AND OXYGEN CONCENTRATION     │
└─────────────────────────────┘
              │
┌─────────────────────────────┐
│ CALCULATE STEADY            │ ~409
│ OPERATION COMMON            │
│ RAIL PRESSURE Pcrc          │
└─────────────────────────────┘
              │
┌─────────────────────────────┐
│ CALCULATE FINAL COMMON      │ ~411
│ RAIL PRESSURE Pcrcfn        │
└─────────────────────────────┘
              │
┌─────────────────────────────┐
│ CALCULATE Tqfn,Tqfnb        │ ~413
│ FROM NE,Qfin,Pcrcfn,Pcrb    │
└─────────────────────────────┘
              │
┌─────────────────────────────┐
│ CALCULATE FINAL MAIN        │ ~415
│ FUEL INJECTION TIMING       │
│ Amainfn                     │
└─────────────────────────────┘
              │
           ( END )
```

# Fig.5(A)

$$\boxed{\text{OPERATION FOR SETTING MAIN} \atop \text{AND PILOT FUEL INJECTION}}$$

| |
|---|
| READ NE,ACCP,TW,TI,PI AND CALCULATE OXYGEN CONCENTRATION IN THE INTAKE AIR | ~501

| |
|---|
| CALCULATE Qfin,Pcrb FROM NE,ACCP | ~503

| |
|---|
| CALCULATE Amainb, Aplb FROM NE,Qfin | ~505

| |
|---|
| CALCULATE TW,TI,PI, AND OXYGEN CONCENTRATION LTW,LTI,LPI,LO | ~507

| |
|---|
| CALCULATE Pcrc | ~509

| |
|---|
| CALCULATE Pcrfn | ~511

| |
|---|
| CALCULATE Tqfn,Tqfnb | ~513

| |
|---|
| CALCULATE Amainfn | ~515

(A)

# Fig.5(B)

$\text{A}$

CALCULATE Vplb FROM Aplb ∼517

CALCULATE KTW,KTI,KPI
FROM TW,TI,PI ∼519

CALCULATE Vplc ∼521

CALCULATE Vplcfn ∼523

CALCULATE Aplcfn
FROM Vplcfn ∼525

CALCULATE Qpl
FROM Aplcfn,Amainfn ∼527

END